(19) Europäisches Patentamt

European Patent Office

Office européen des brevets

(11) **EP 1 016 853 B1**

(12) **FASCICULE DE BREVET EUROPEEN**

(45) Date de publication et mention
de la délivrance du brevet:
**06.05.2004 Bulletin 2004/19**

(51) Int Cl.⁷: **G01D 5/34**, G01B 11/16

(21) Numéro de dépôt: **99403311.6**

(22) Date de dépôt: **29.12.1999**

(54) **Capteur polarimétrique à fibre optique**

Fiberoptischer polarimetrischer Sensor

Polarimetric fiberoptic sensor

(84) Etats contractants désignés:
**BE CH DE GB LI**

(30) Priorité: **30.12.1998 FR 9816632**

(43) Date de publication de la demande:
**05.07.2000 Bulletin 2000/27**

(73) Titulaire: **SOCIETE NATIONALE D'ETUDE ET DE CONSTRUCTION DE MOTEURS D'AVIATION, "S.N.E.C.M.A."**
**75015 Paris (FR)**

(72) Inventeurs:
• **Gaumont, Eric**
**03400 Yzeure (FR)**

• **Clément, Michel**
**27200 Vernon (FR)**
• **Chakari, Ayoub**
**67000 Strasbourg (FR)**
• **Meyrueis, Patrick**
**67000 Strasbourg (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**EP-A- 0 538 779**  **EP-A- 0 621 461**
**WO-A-93/11404**  **US-A- 4 358 678**

Printed by Jouve, 75001 PARIS (FR)

## Description

Domaine de la technique

La présente invention concerne un capteur polarimétrique de position à fibre optique destiné à être mis en oeuvre dans des environnements sévères notamment cryogéniques.

Art antérieur

Les méthodes de mesures de position en prise directe sur des dispositifs immergés dans un fluide cryogénique, comme des vannes à boisseau, interdisent en pratique les capteurs de type potentiométriques, capacitifs ou électriques de manière générale, ainsi que les codeurs optiques. De tels environnements peuvent en effet être perturbés à la fois par la température, par les rayonnements électromagnétiques, par les fortes pressions, les vibrations et par le caractère explosif de certains fluides cryogéniques comme l'oxygène et l'hydrogène liquide. Les types de capteur envisageables sont donc limités par les contraintes que ces environnements critiques induisent. Un exemple de solution à ces difficultés est toutefois donné par la demande de brevet FR-A-2 714 172 de la demanderesse relatif à un capteur de position angulaire à fibre optique par biréfringence.

Malheureusement, ce type de capteur à fibre optique, malgré sa précision et son indépendance vis à vis des perturbations électromagnétiques, présente encore certains inconvénients du fait notamment de sa trop grande sensibilité à la température et la pression.

Description de l'invention

La présente invention propose donc un nouveau capteur polarimétrique à fibre optique permettant des mesures de haute précision et fonctionnant sur une large plage de température allant des températures cryogéniques jusqu'à des températures élevées de l'ordre de 400°C et cela quelles que soient les perturbations parasites pouvant l'affecter.

Un but de l'invention est aussi de proposer un capteur dont le conditionnement de la fibre optique est adapté pour contribuer à son insensibilisation thermique. Un autre but de l'invention est de réaliser un capteur présentant un montage optique et mécanique particulièrement simplifié et notamment ne nécessitant aucun réglage préalable d'optimisation sur banc d'essai. Encore un but de l'invention est de réaliser un capteur qui puisse être mis en oeuvre aussi bien comme capteur de position angulaire que comme capteur de déplacement linéaire (après une transformation simple).

Ces buts sont atteints par un capteur polarimétrique à fibre optique pour la mesure d'un déplacement d'un objet en rotation par rapport à un bâti, comportant une fibre optique de mesure solidaire, sur une fraction de sa longueur, à la fois en un point central (O) de l'objet et en des premier et second points fixes (A, B) du bâti, des moyens disposés à une extrémité de la fibre de mesure pour émettre dans cette fibre de mesure un faisceau lumineux selon une polarisation déterminée, des moyens pour exercer une torsion sur cette fibre de mesure en vue d'en modifier la polarisation, des moyens disposés à une autre extrémité de la fibre de mesure pour d'une part détecter le faisceau lumineux résultant et d'autre part déterminer le déplacement de l'objet par analyse de la polarisation ainsi modifiée, caractérisé en ce que ladite fibre de mesure qui est dépourvue, sur ladite fraction de sa longueur, du revêtement assurant sa tenue mécanique est glissée dans une gaine déformable de guidage fixée d'une part à l'objet en rotation et d'autre part au bâti.

Avec la structure de l'invention, tout contact rigide entre la fibre de mesure et ses supports sont éliminés assurant ainsi une totale indépendance des mesures vis à vis des contraintes thermiques.

De préférence, la gaine de guidage déformable est réalisée en acier fin et cette gaine peut être doublée à l'intérieur par une gaine souple de protection.

Dans un mode de réalisation particulier du capteur polarimétrique selon l'invention dans lequel les moyens d'émission émettent un faisceau lumineux de polarisation linéaire, il est prévu des moyens de pression placés en sortie de ces moyens d'émission et destinés à provoquer une rotation sélective de la polarisation. Ces moyens de pression comportent un élément piézoélectrique plan commandé à partir d'une tension et destiné à appliquer sélectivement une force radiale sur la fibre de mesure, afin d'obtenir en sortie de ces moyens de pression une polarisation linéaire de direction 45°, la polarisation en entrée de ces moyens de pression étant supposée linéaire de direction 0°.

Les moyens d'émission et de détection du faisceau lumineux de mesure et les moyens de détermination du déplacement de l'objet sont montés dans un boîtier rempli d'une atmosphère sèche et communiquant directement avec un volume intérieur de ladite gaine de guidage déformable. Par cette configuration, les perturbations externes ont très peu d'influence sur les mesures.

Avantageusement, le boîtier est maintenu à pression constante par un système de compensation de pression à piston ou membrane.

Selon une variante de réalisation, dans laquelle les moyens d'émission et de détection du faisceau lumineux de mesure et les moyens de détermination du déplacement de l'objet sont éloignés de la fibre de mesure, une des deux extrémités de ladite fibre de mesure est reliée auxdits moyens d'émission au travers d'une fibre « d'émission » et l'autre de ses deux extrémités est reliée auxdits moyens de détection au travers d'une fibre de « détection », et le volume intérieur de ladite gaine de guidage déformable communique directement avec le volume intérieur d'un boîtier rempli d'une atmosphère sèche et maintenu à pression constante par un système de compensation de pression à piston ou membrane.

De préférence, le boîtier est fixé au bâti par des moyens de fixation ponctuels faiblement conducteur de la chaleur et il comporte des parois formés en un matériau thermiquement isolant.

Ce boîtier comporte en outre un support isostatique, avantageusement en matériau céramique, percé de deux trous pour recevoir lesdites fibres d'émission et de détection et pour les maintenir en contact avec lesdites deux extrémités de la fibre de mesure. Le maintien desdites extrémités de la fibre de mesure dans ledit support peut être effectué soit par apport d'un ciment céramique dans lesdits trous soit par projection plasma d'un dépôt métallique dans lesdits trous.

Brève description des dessins

D'autres caractéristiques et avantages de la présente invention ressortiront mieux de la description suivante, faite à titre indicatif et non limitatif, en regard des dessins annexés, sur lesquels :

- la figure 1 représente un premier exemple de réalisation d'un capteur selon l'invention,
- les figures 2a, 2b, 2c montrent trois exemples de réalisation possibles de la boucle de mesure de la figure 1,
- la figure 3 illustre un élément de raccord de la fibre de mesure de la figure 1,
- les figures 4a, 4b, 4c montrent trois exemples de réalisation possibles de la fibre de liaison aller de la figure 1,
- la figure 5 illustre un exemple de réalisation d'un capteur selon l'invention à plage de mesure élargie,
- la figure 5a montre un exemple de réalisation de moyens de commutation de polarisation mis en oeuvre dans la structure de la figure 5,
- la figure 6 montre deux courbes de réponse d'un capteur de mesure conforme à la figure 5,
- la figure 7 représente un second exemple de réalisation d'un capteur selon l'invention, et
- la figure 8 représente, pour deux températures distinctes, les courbes de variation du déplacement angulaire en fonction de l'intensité mesurée.

Description d'un mode de réalisation préférentiel de l'invention

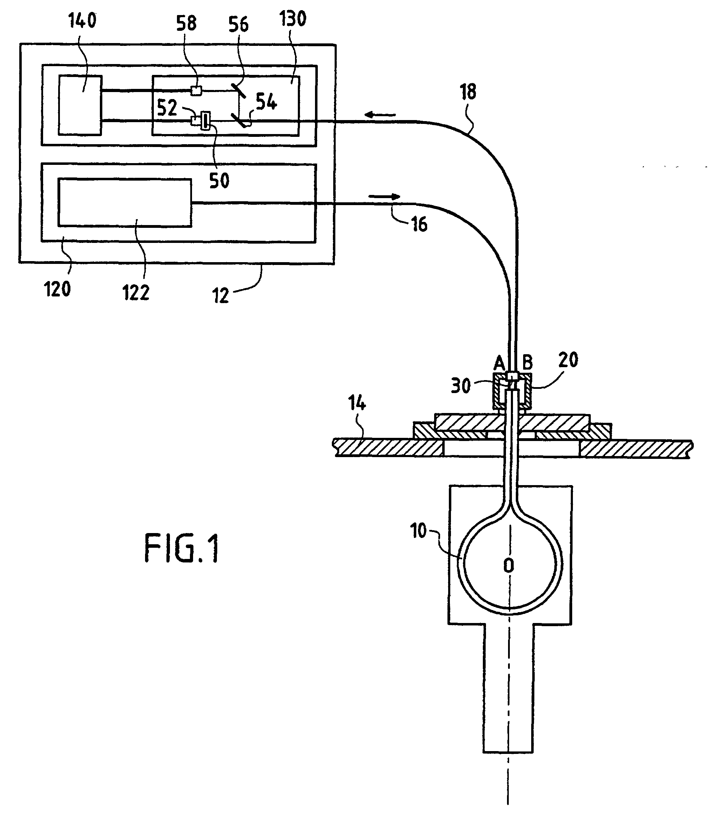

Un premier exemple d'un capteur polarimétrique à fibre optique selon l'invention appliqué à la mesure d'un déplacement angulaire d'une vanne à boisseau évoluant en ambiance cryogénique est illustré à la figure 1.

Ce capteur se compose essentiellement de trois éléments : une fibre sensible de mesure 10 fixée dans une zone de mesure sur l'objet en rotation (boisseau de la vanne en l'espèce) dont on souhaite connaître le déplacement, un boîtier optoélectronique 12 pour l'émission et la détection d'un signal lumineux de mesure, éloigné en principe de la zone de mesure proprement dite, et fixé par exemple sur un bâti 14 et deux fibres de liaison, une fibre d'émission 16 et une fibre de détection 18, pour le transport aller et retour de ce signal lumineux de mesure entre le boîtier optoélectronique et la fibre de mesure.

Selon l'invention, la fibre sensible est pourvue dans la zone de mesure d'un habillage spécialement conçu pour les fortes perturbations thermiques et de pression. Pour cela, la fibre, dépourvue de son revêtement externe (par exemple en polymide) nécessaire à sa tenue mécanique, est glissée dans une gaine de guidage déformable (en acier fin par exemple) solidarisée d'une part au bâti en deux points A et B, dont la position peut varier selon la configuration choisie, et d'autre part en un point O sur l'axe de rotation de l'objet en rotation. Le guidage lâche qu'assure cette gaine lui permet ainsi de décrire sans rupture un parcours prédéfini. Cette solidarisation par l'intermédiaire d'une gaine extérieure à la fibre (et non sur la fibre elle-même) permet d'éliminer tout contact rigide dans la zone de mesure, la fibre sensible de mesure n'ayant dès lors aucun point de collage, ni sur la gaine, ni sur le bâti et l'objet en rotation, contrairement à l'art antérieur. Les points de collage de la fibre sur le bâti sont au contraire rejetés à l'extérieur de la zone de mesure afin d'assurer aux mesures une bonne indépendance vis à vis des contraintes thermiques, surtout pour les températures cryogéniques. La gaine déformable peut toutefois être doublée à l'intérieur par une gaine souple de protection en Téflon (une marque de la société Du Pont de Nemours). Pour les températures de la gamme atmosphérique, typiquement [+70°C à -70°C], cette fibre de mesure peut éventuellement être revêtue d'un revêtement de très faible épaisseur, inférieure ou égale au micron, et constitué d'un matériau métallique adapté à cet environnement thermique (ou encore un polymide). Toutefois, pour des gammes de températures plus critiques, comme les températures cryogéniques, il est indispensable que la fibre utilisée soit totalement dénudée dans la zone de mesure, pour n'être protégée que par la gaine déformable de guidage, de façon lâche. Dans tous les cas, cette fibre de mesure peut être selon les performances recherchées, soit une fibre optique monomode standard de type télécom soit une fibre de type « SPUN » (à très faible biréfringence).

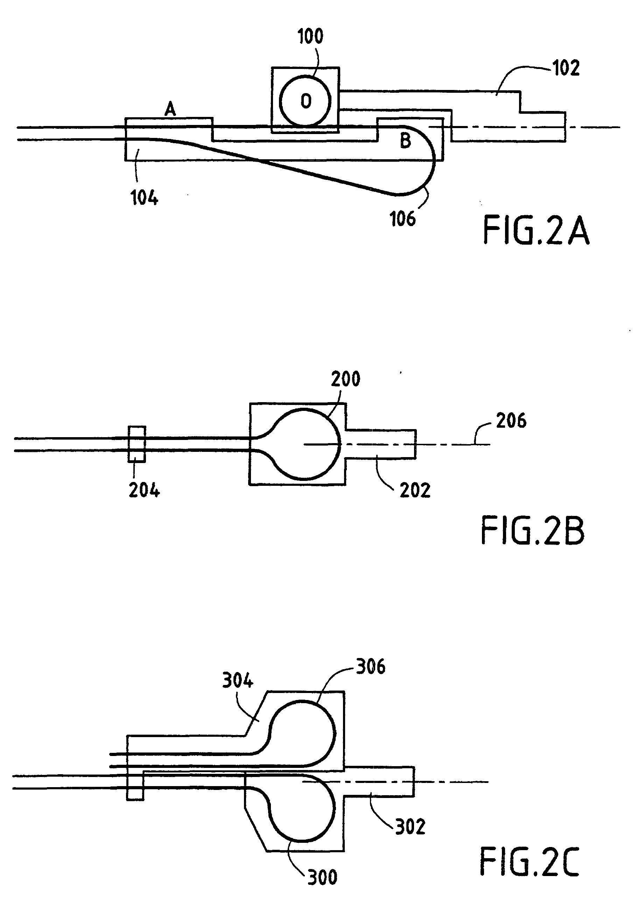

Selon l'application envisagée, la fibre sensible de mesure peut suivre plusieurs trajets possibles sur le bâti et sur l'objet en rotation par l'intermédiaire de son guidage par la gaine (figure 2).

De façon générale, il est toujours procédé à la formation, au point O de l'objet en rotation, d'une boucle fermée qui permet d'obtenir une gamme de mesure angulaire de 45° ou 90° du fait de la biréfringence linéaire qu'elle induit dans la fibre par courbure. Le diamètre de cette boucle circulaire peut prendre différentes valeurs prédéterminées pour minimiser les effets, sur la mesure, de la biréfringence induite dans la fibre par une grande fluctuation thermique. Par exemple, la dimension de la boucle peut être calculée pour que chaque boucle induise une biréfringence linéaire dont le déphasage est un multiple de $\pi/2$ de sorte qu'elle soit équivalente d'une lame quart d'onde. Dans ce premier cas, la polarisation à l'entrée de la boucle devra être circulaire et la gamme angulaire de mesure sera de 90°. De même, la dimension de cette boucle peut être déterminée pour induire une biréfringence linéaire dont le déphasage est multiple de $\pi$ de sorte qu'elle soit équivalente d'une lame demi-onde. Dans ce second cas, la polarisation à l'entrée de la boucle devra être linéaire et la gamme angulaire de mesure sera de seulement 45°.

Dans une première configuration illustrée à la figure 2a, la boucle 100 est formée au point O de l'objet en rotation 102 au milieu des points A et B de fixation au bâti 104 et de préférence, il est rajouté une demi-boucle de retour 106 de sorte que la fibre de mesure soit configurée de manière comparable à une sonde. Cette demi-boucle de retour est formée sur le bâti après la boucle fermée et son diamètre est déterminé de telle sorte que la biréfringence initiale de courbure induite soit un multiple de $\pi$, la demi-boucle étant ainsi équivalente d'une lame demi-onde, ce qui minimise l'effet de la fluctuation thermique.

Dans une deuxième configuration illustrée à la figure 2b, dite « en boucle de lacets », il est proposé une seule boucle 200 fixée sur l'objet en rotation 202 et dont les deux extrémités arrivent et repartent du même côté sur le bâti 204. L'axe de rotation 206 de la boucle est situé sur l'axe des deux bruns de sorties (les deux extrémités de la gaine) et sur le diamètre de la boucle prolongeant ce dernier.

Dans une troisième configuration illustrée à la figure 2c, dite « en boucle de lacets désaxée », il est prévu une deuxième boucle 306 montée aussi dans une gaine déformable, fixe par rapport au bâti 304, à l'intérieur de laquelle est glissée une deuxième fibre de mesure utilisée comme fibre de référence sensible aux mêmes éventuelles perturbations parasites (étrangères au mouvement de rotation) que la fibre de mesure 300 fixée sur l'objet en rotation 302. L'étalonnage de la réponse polarimétrique de cette seconde fibre peut servir également de capteur de température intégré au capteur de position angulaire.

La partie sensible du capteur peut être placée dans un environnement fortement perturbé en pression, en vibrations et surtout en température depuis des températures cryogéniques jusqu'à des températures à la limite de la tenue mécanique de la fibre. En outre, la zone de mesure possède en général une hygrométrie non nulle. Aussi, selon l'invention, il est prévu de placer un raccord de fibre spécialement conçu en entrée de la zone de mesure au niveau de l'introduction des fibres de liaison 16, 18.

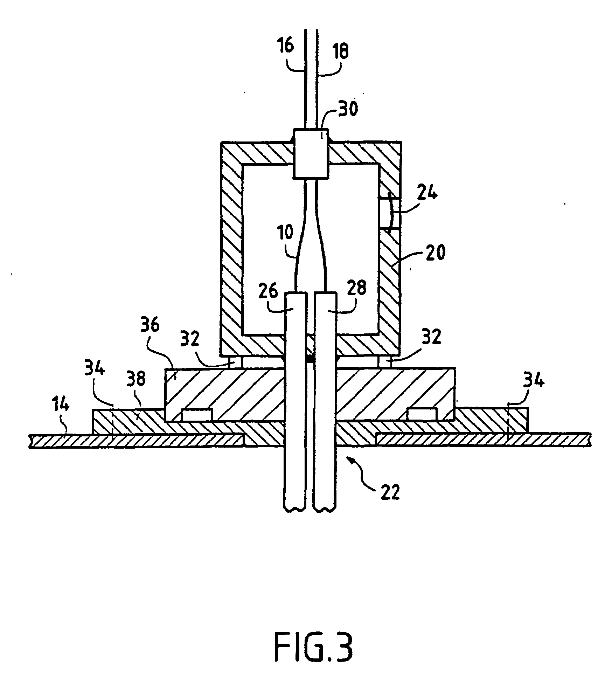

Ce raccord illustré sur la figure 3 se présente sous la forme d'un petit boîtier 20 destiné à recevoir la fibre de mesure 10 sortant de la zone de mesure et à la relier aux fibres de liaison assurant le transport du signal lumineux de mesure en limitant les contraintes exercées sur elle. Ce boîtier est en communication directe avec le volume intérieur de la gaine déformable 22 guidant cette fibre de mesure et il est rempli d'un gaz neutre (de l'azote par exemple) créant une atmosphère sèche afin d'éviter toute formation de glace sur la fibre. Il est muni d'un dispositif le rendant isobare, comme par exemple une membrane déformable 24 pour encaisser les compressions/décompressions dues aux changements de température dans l'enceinte de la gaine de guidage. Les parois de ce boîtier sont conçues pour être les plus isothermes possibles par l'utilisation d'un matériau isolant thermique et pour présenter une faible conduction thermique. Le boîtier comporte à une extrémité des premières ouvertures 26, 28 pour le passage des deux extrémités de la gaine de guidage et à une autre extrémité, dans l'axe de cette gaine, est disposée un support isostatique comme une bague en céramique 30 avec deux petits trous pour permettre le passage et un collage des deux extrémités de la fibre de mesure avec une très faible dilatation thermique. L'objectif du collage qui doit être homogène est de limiter la dilatation thermique des matériaux utilisés, surtout la contraction thermique pour les variations négatives de température. Aussi, chaque trou doit avoir un diamètre au moins 5 fois plus grand que l'épaisseur de la fibre qu'il reçoit afin que le positionnement de celle-ci dans l'axe du trou soit réalisé sans difficulté. Le matériau d'apport (de collage) peut être choisi en fonction de différents critères comme la facilité de fabrication, le domaine de l'application, etc. Une solution simple et élégante est de combler le trou par un apport de ciment céramique (poudre de silice et silicate de soude), une autre solution, toutefois plus technologique, consiste à effectuer un dépôt métallique par projection plasma. On notera toutefois, que si l'hygrométrie est nulle, un support isolé thermiquement et un simple trou de passage dans un plot en céramique seront alors suffisants.

Le boîtier 20 est fixé au bâti 14 par des attaches ou fixations ponctuelles 32, 34 limitant la conduction thermique. Deux flasques de raccordement avantageusement superposés, l'un 36 pour permettre une rotation de la boucle de mesure 10 par rapport au bâti 14 au moment de solidariser en O la gaine sur l'objet en rotation (c'est à dire pour assurer un réglage du zéro de rotation) et l'autre 38 pour assurer la liaison avec le bâti, sont également prévus. Ces flasques sont adaptés en taille et épaisseur pour présenter une configuration anti-conduction thermique (faibles couches d'air ou couches isolantes, limitation des ponts thermiques, etc.). Toutes les étanchéités sur les fibres de liaison (dans la bague ou tube céramique) et sur la gaine de guidage sont de type statique, c'est à dire sans étanchéité à assurer sur un élément tournant.

Revenons à la figure 1. Le boîtier optoélectronique déporté 12, comporte à la fois des moyens 120 pour assurer l'émission d'un signal lumineux de mesure et des moyens 130, 140 pour assurer sa détection et son traitement après traversée de la zone de mesure.

L'émission de lumière est obtenue à partir d'un composant optoélectronique connu en soi tenant lieu de source lumineuse monochromatique, polarisée selon un état fixé, soit linéaire soit circulaire, et stabilisé thermiquement. Ce composant peut comporter par exemple, une diode laser d'émission semi-conductrice 122 montée sur un élément Peltier de régulation thermique. Il peut intégrer aussi deux autres éléments (non représentés), une thermistance pour la mesure de la température de la diode laser d'émission et une photodiode pour la mesure de l'intensité lumineuse injectée.

Trois configurations sont envisageables pour relier la source lumineuse à la zone de mesure :

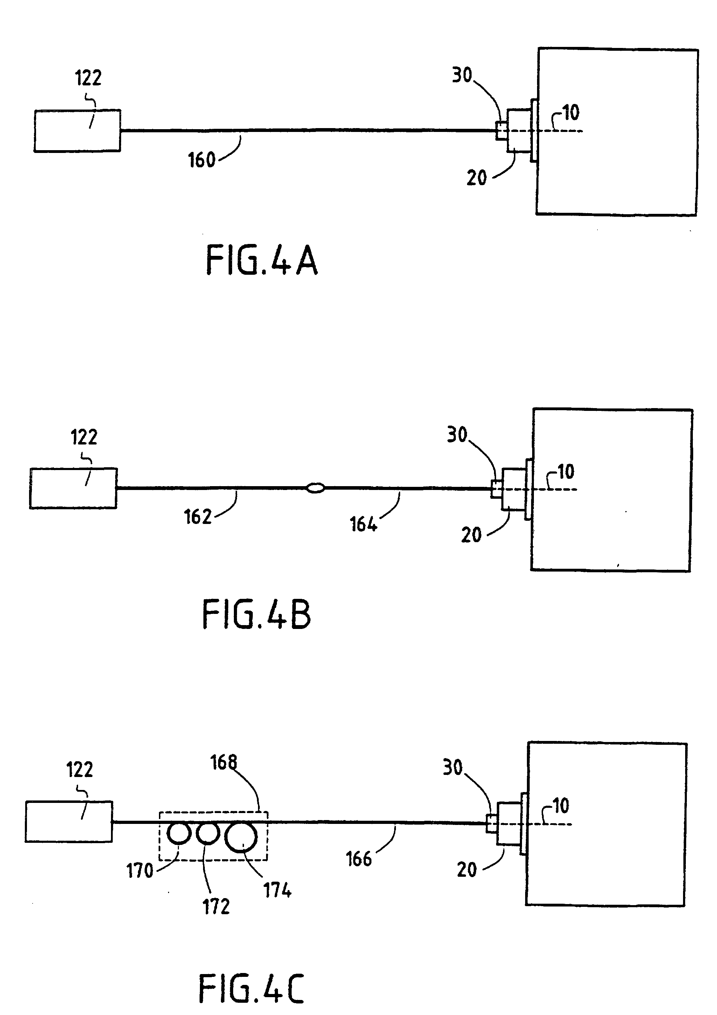

Dans une première configuration (voir figure 4a), la diode laser d'émission 122 est directement connectée (en mode pigtailed) selon un axe prédéterminé à une première extrémité d'une fibre 160 à maintien de polarisation des états linéaires (PMF), de type « BOW TIE » par exemple, véhiculant sans modification une lumière monochromatique à polarisation linéaire. L'autre extrémité de cette fibre est reliée alors à la fibre de mesure 10 au niveau du tube céramique 30 du boîtier raccord 20. Cette configuration est la plus simple pour obtenir une gamme angulaire de mesure de 45° ou moins, pour une précision de mesure de base inférieure au dixième de degré (0.1°), et des effets thermiques minimum.

Dans une deuxième configuration (voir figure 4b), la diode laser d'émission 122 est directement connectée à une première extrémité d'une fibre 162 monomode de type télécom le long de laquelle on réalise une boucle équivalente d'une lame quart-d'onde pour sélectionner un état de polarisation circulaire. Ceci se fait de préférence sur une courte distance, juste après la diode, en ligne droite et dans une ambiance thermique stable comparée à celle que peut subir la zone de mesure (soumis par exemple à des variations thermiques cryogéniques). Eventuellement, selon la distance à parcourir, l'autre extrémité de cette fibre est connectée par fusion une autre fibre optique monomode 164 du type à maintien de polarisation des états circulaires qui se prolonge alors jusqu'à la fibre de mesure 10 au niveau du tube céramique 30. Cette configuration est particulièrement adaptée pour obtenir une gamme angulaire de 90° et des effets thermiques minimum.

Dans une troisième configuration (voir figure 4c), la diode laser d'émission 122 est directement connectée une première extrémité d'une fibre standard 166 sur laquelle on forme un contrôleur de polarisation 168 avec trois boucles. La première boucle 170 a un diamètre calculé pour qu'elle soit équivalente d'une lame quart-d'onde qui permet, à partir de n'importe quelle polarisation, d'obtenir un état linéaire. La deuxième boucle 172 a un diamètre calculé pour qu'elle soit équivalente aussi d'une lame quart-d'onde, afin d'obtenir n'importe qu'elle état de polarisation sur un plan de polarisation donné. Le diamètre de la troisième boucle 174 est calculé pour qu'elle soit équivalente d'une lame demi-onde afin de sélectionner n'importe quelle direction de polarisation à partir de l'état de polarisation sélectionné par la deuxième boucle 172. Cette fibre 166 se prolonge ensuite jusqu'à la fibre de mesure 10 au niveau du tube céramique 30. Avec cette configuration, différentes polarisations peuvent être sélectionnées pour l'injection dans la fibre de mesure, ce qui donne une grande souplesse de choix pour la gamme angulaire mesurée.

Pour permettre une gamme de mesure encore plus étendue que celle autorisée avec les versions précitées, il est possible en comblant les « trous » périodiques de sensibilité de la réponse angulaire de chaque fibre de mesure, d'associer deux mesures dont les gammes angulaires sont décalées.

Une première solution consiste simplement à doubler la fibre de mesure en utilisant deux sources de lumière. Une seconde solution plus intéressante consiste à recourir à l'utilisation d'un coupleur PMF en X placé entre la diode laser d'émission 122 et la fibre de liaison aller 16. L'un des bruns de fibre du coupleur est directement connecté à la diode laser d'émission, les deux autres bruns de fibre opposés étant alors utilisés comme fibres d'émission vers la fibre de mesure. La polarisation à l'entrée de chaque fibre d'émission est linéaire et orientée dans une direction optimisée pour que chaque réponse angulaire se complète. Cette configuration à coupleur suppose toutefois que le boîtier optoélectronique 12 offre une bonne stabilité en température.

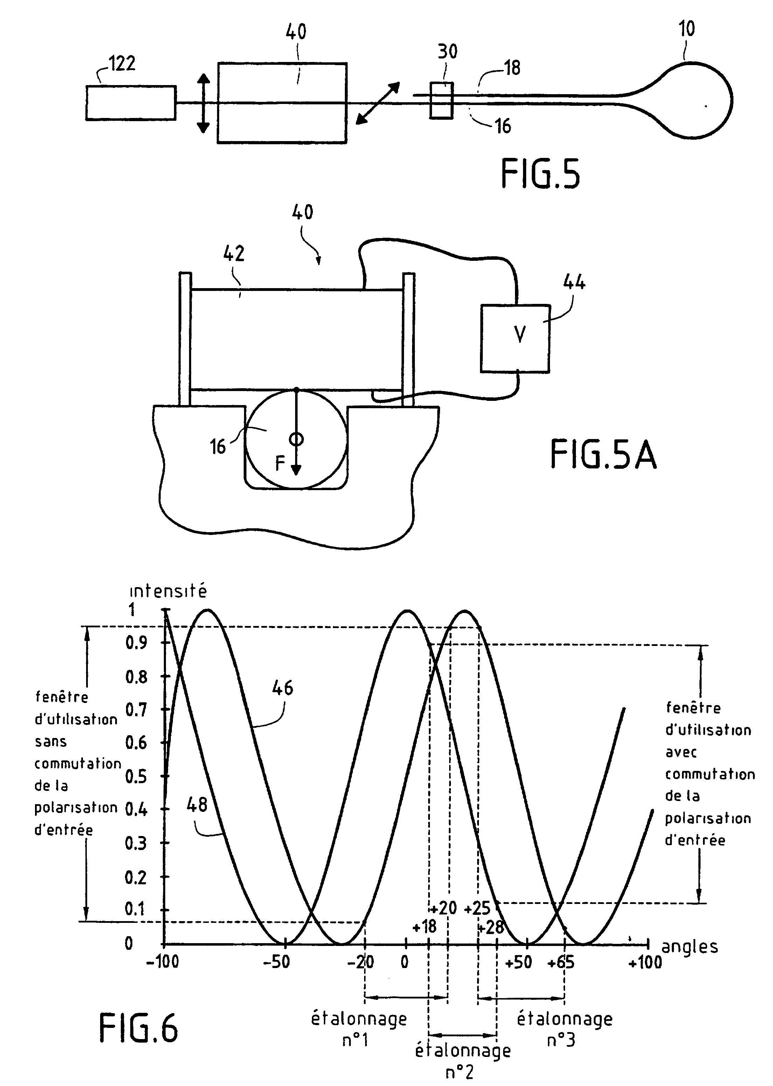

Une troisième solution illustrée à la figure 5, qui peut être mise en oeuvre en cas de polarisation linéaire en sortie de la diode laser d'émission, consiste à effectuer une commutation de cette polarisation en entrée de la zone de mesure de façon à doubler la gamme angulaire théorique initiale de mesure (mais un triplement, ou un quatruplement amenant la gamme de mesure à 180° serait aussi possible). Pour cela, il convient de placer sur la fibre optique d'émission 16, en sortie de la diode d'émission 122, des moyens de pression 40 qui vont exercer une contrainte mécanique radiale sur cette fibre dans une direction et avec une amplitude bien déterminée, afin de faire « commuter » la polarisation linéaire d'origine (de direction indexée 0°) à une autre polarisation de direction indexée 45°. L'obtention de cette polarisation linéaire à 45° par l'action de la commutation a pour but, en transformant la réponse première du capteur en une réponse seconde disponible alors dans une gamme angulaire décalée de 22,5°, de pallier le trou de sensibilité de la première gamme de mesure puisque, comme le montre la figure 6, le signal de réponse après la commutation retrouve une sensibilité qu'il aurait perdue sans cette action sur la fibre (un signal est actif lorsque l'autre se trouve dans une période non sensible de la réponse angulaire de la fibre).

La figure 5a illustre un exemple non limitatif de réalisation des moyens de pression 40 pour obtenir une rotation de la polarisation dans une direction orientée à 45°. Le principe est de générer dans la fibre une biréfringence linéaire équivalente à celle d'une lame demi-onde dont l'axe principal est orienté dans une direction à 22.5° de la polarisation de sortie de la diode laser d'émission et qui induit un déphasage égal à π entre les deux modes propres linéaires de cette biréfringence. Il faut pour cela appliquer une force radiale sur la fibre 16 préalablement allongée dans une rainure pratiquée en ligne droite selon une direction de 22.5° par rapport à la direction de polarisation linéaire de sortie de la diode laser. L'application de cette force peut être réalisée très simplement à l'aide d'un élément piézoélectrique plan 42 excité par un moyen 44 délivrant une tension carrée (V) à une fréquence élevée par rapport au mouvement de rotation de l'objet. Du point de vue optique, la force nécessaire pour obtenir le déphasage de π est donné par la relation suivante (pour une fibre silice/silice) :

$$F = \pi \lambda r E \tau /8C$$

où λ est la longueur d'onde de la lumière, r est le rayon de la fibre, C est la constante élastooptique de la silice de la fibre, E est le module d'Young de la silice, et τ compris entre 1 et 8/π est un terme correcteur provenant du fait que le contact de la force F n'est pas ponctuel.

Le principe de la commande de la polarisation est explicité en regard de la figure 6 qui montre les signaux de réponse du capteur obtenus dans les deux gammes de mesure précitées. La courbe 46 représente le signal de réponse du capteur (mesure de l'angle en fonction de l'intensité recueillie) en absence de toute commutation de la polarisation. C'est un signal périodique, de la forme Sinus au carré (Sin²), donc avec une période de 97.30°. Ainsi, si l'on indexe à 0°, sans torsion parasite, la position angulaire du plan d'enroulement de la boucle de mesure 10, on peut alors définir sur une partie linéaire croissante de cette courbe une première plage d'étalonnage, par exemple comprise entre -20° et +20°, dans laquelle la mesure présente une sensibilité maximale (en effet, aux sommets de la courbe du fait de la faiblesse de la pente, la sensibilité est réduite et chute jusqu'à zéro). La réponse du capteur après commutation de la polarisation est illustrée par la courbe 48. On peut observer que du fait du décalage angulaire, cette seconde courbe présente une forte sensibilité de mesure (forte pente de la courbe) aux positions angulaires pour lesquelles la première courbe présentait une faible sensibilité. Il peut être alors défini une deuxième plage d'étalonnage, par exemple comprise entre +18° et +28° (un très léger chevauchement de quelques degrés est préférable pour éviter les effets de bords), et dont la largeur est de préférence sensiblement inférieure à la précédente (la sensibilité de ce second signal est en effet plus réduite et il est plus sensible à la température). Toutefois, afin de ne pas en multiplier le nombre, cette plage ne devra pas être trop réduite. A l'extrême, on notera cependant que la présence d'une seule plage suffit malgré tout à doubler la gamme angulaire initiale (sans commutation) de mesure. On retrouve ensuite sur une partie linéaire décroissante de la première courbe une troisième plage d'étalonnage, par exemple comprise entre +25° et +65°. Par un très simple traitement de données par fenêtrage (il sera avantageux de mettre aussi en oeuvre une détection synchrone pour une meilleure filtration des bruits de mesure), connu de l'homme de l'art, il sera ainsi possible de commander la commutation de polarisation de telle sorte que le signal de mesure, en fonction de la position angulaire, évolue successivement d'une plage d'étalonnage à une autre en gardant sa sensibilité maximale.

La détection du signal contenant l'information polarimétrique qui permettra de déduire la valeur angulaire est obtenue en sortie de la fibre de liaison retour 18 à travers un polariseur 50 orienté selon un axe prédéfini et suivi par une première photodiode de réception 52. Cependant, juste avant le polariseur, on peut interposer un élément séparateur de faisceau 54, 56 pour recueillir en plus l'intensité lumineuse sur une seconde photodiode 58, indépendamment de la polarisation de la lumière. Ceci permet, dans le cas d'un parcours de la lumière trop contraint en courbure (rayon de courbure de l'ordre de 5 mm), de déduire les variations thermiques d'intensité lumineuse tout au long de ce parcours. Pour les cas où les fibres de liaison sont moins courbées, la mesure du courant de la photodiode intégrée à la diode d'émission laser, qui est proportionnelle à l'intensité lumineuse injectée dans la fibre de liaison aller 16, est suffisante pour déduire les fluctuations éventuelles de cette diode laser. L'angle de rotation de l'objet sera ensuite déterminé dans un ensemble de traitement de données 140 à partir des variations d'intensité lumineuses recueillies.

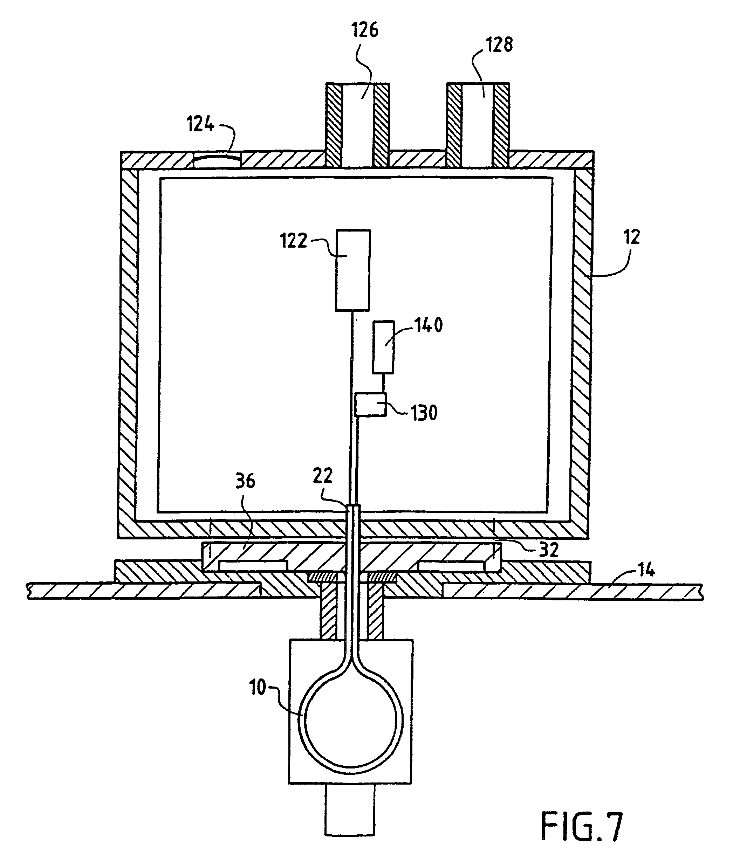

Un second exemple de réalisation d'un capteur selon l'invention qui présente cette fois une structure monobloc (sans déport de l'émission et de la détection) est illustré à la figure 7. Dans ce cas, il n'y a plus besoin de fibre de liaison aller et retour, la fibre de mesure étant directement connectée à la diode laser d'émission et au moyens de détection.

Ce capteur est composé essentiellement de la fibre de mesure 10 à laquelle est maintenant relié directement le boîtier optoélectronique 12. Ce boîtier optoélectronique comporte, comme dans l'exemple précédent, un composant optoélectronique stabilisé thermiquement 122 tenant lieu de source lumineuse monochromatique à polarisation déterminée, par exemple une diode laser semi-conductrice montée sur un élément Pelletier de régulation thermique. Une thermistance pour la mesure de la température de cette diode laser et une photodiode pour la mesure de l'intensité lumineuse injectée dans la fibre de mesure sont en principe intégrés dans ce composant. Il comporte également le composant 130 de détection des signaux de mesure intégrant un polariseur et des lames séparatrices. Le microcontrôleur 140 de traitement des données (détection synchrone, conversion analogique/numérique, etc.) et un circuit (non représenté) pour l'alimentation en énergie de tous ces composants sont en outre également prévus dans ce boîtier.

Dans ce second exemple de réalisation, le boîtier optoélectronique joue le rôle du boîtier raccord de fibre isotherme et isobare précédent. Il sera donc rempli, lors de la fabrication, d'une atmosphère sèche, par exemple un gaz neutre, la nature est adaptée au domaine d'application du capteur considéré et il communique directement avec le volume intérieur de la gaine déformable de guidage 22. La pression de ces volumes réunis est maintenue constante soit, dans un cas simple où la pression extérieure au boîtier est stable, par un système 124 de compensation de pression de type membrane ou piston disposé sur le boîtier et destiné à encaisser les variations de pression dues aux variations de température des deux volumes communicants, soit, dans le cas plus complexe où la pression externe au boîtier est sensiblement fluctuante, par une fermeture étanche du boîtier et une régulation de température du volume de gaz sur la plage de température à laquelle il est soumis (typiquement la plage atmosphérique -70°C à +70°C). Le remplissage du boîtier par le gaz est fait par l'intermédiaire de raccords 126, 128 prévus à cet effet et qui seront ensuite obturés.

Comme pour le premier exemple de réalisation, le boîtier est fixé au bâti (au travers de flasques de raccordement) par l'intermédiaire d'attaches ponctuelles 32, 34 faiblement conductrices de la chaleur.

Le procédé de mesure mis en oeuvre avec le capteur selon l'invention repose sur la variation des propriétés optiques de polarisation de la lumière en sortie de la fibre de mesure en fonction de la rotation de cette fibre. En effet, la fibre optique de mesure est soumise, sur la longueur comprise entre les deux points de fixation A et B, à un phénomène de biréfringence optique relativement complexe, issu à la fois de la biréfringence linéaire induite par la courbure de la boucle et de la biréfringence circulaire induite par la torsion de la fibre le long de son axe. Ce phénomène mixte, appelé biréfringence elliptique, est souvent délaissé en raison de son caractère trop général au profit des cas particuliers de biréfringence linéaire et de biréfringence circulaire. Cependant, une modélisation précise de ces phénomènes le long de la fibre optique de mesure a permis de mettre en évidence que l'ajustement de certains paramètres aboutit à une minimisation poussée de la modification de l'intensité du signal à la sortie des moyens de détection.

Dès lors, le calcul de la mesure de l'angle de rotation en fonction de la température peut être facilement corrigé et le procédé de mesure ainsi défini devient insensible aux fluctuations thermiques. Les paramètres d'optimisation thermique sont les suivants :

- la polarisation $P_e$, de la lumière dans la fibre à l'entrée de la zone de mesure doit être circulaire ou linéaire,
- les dimensions de la boucle, quelle que soit sa forme exacte, sont déterminées afin que cette boucle induise un déphasage entre les deux modes, lents et rapides, de la polarisation de la lumière le long de la fibre égal à :

$$\Delta\phi_1 = (2n-1)\pi/2$$

si la polarisation en amont $P_e$, est circulaire, ou

$$\Delta\phi 1 = (2n-1)\pi,$$

si la polarisation en amont $P_e$, est linéaire,
- la direction d'orientation du polariseur est déterminée en fonction de la polarisation d'entrée dans la zone de mesure et de la direction du plan de courbure de la boucle de la fibre de mesure. Elle peut prendre deux valeurs : soit alignée avec la direction du plan de courbure de la fibre, soit à 90°,
- la longueur d'onde de la source est choisie de préférence la plus élevée possible de façon minimiser les effets thermiques sur la réponse. Une longueur d'onde de l'ordre de 1300 nm ou même plus élevée autour de 1550 nm, permet, soit de diminuer les dimensions de la boucle à égalité de performances, soit de diminuer les effets thermiques pour des dimensions de boucles comparables.

Ce procédé de mesure peut être mis en oeuvre selon les trois étapes successives suivantes:

a) injection d'une lumière polarisée à une extrémité d'une première fibre de liaison « dite d'émission » configurée pour assurer un contrôle sélectif de la polarisation en entrée de la fibre de mesure à laquelle elle est connectée,
b) détection des changements de la polarisation induits par la torsion de la fibre de mesure à une extrémité d'une seconde fibre de liaison « dite de détection » connectée en sortie de la fibre de mesure,
c) détermination du déplacement de l'objet par comparaison de la polarisation ainsi mesurée avec des valeurs prédéterminées obtenues après un calcul d'étalonnage effectué en fonction de déplacements prédéterminés.

Bien entendu, dans la version monobloc du capteur, l'injection et la détection des étapes a) et b) sont effectuées directement aux deux extrémités de la fibre de mesure.

Avantageusement, on peut y adjoindre une étape complémentaire de :

d) correction de la très faible modulation thermique de l'offset et du gain de la réponse angulaire grâce à un calcul d'étalonnage, en fonction de l'information sur la température le long de la fibre.

Et également, dans le but de s'affranchir des éventuelles fluctuations de puissance de la source lumineuse et de la fibre de mesure, une étape suivante de :

e) mesure de l'intensité du signal lumineux, indépendamment de sa polarisation, recueilli à l'extrémité de la fibre de détection.

La présente invention est de par sa structure particulièrement adaptée à de nombreuses applications. En effet, elle peut être mis en oeuvre pour la mesure, soit d'un déplacement angulaire d'un objet en rotation par rapport à un bâti, soit même d'un déplacement linéaire d'un objet en translation, tout en restant insensible aux perturbations de pression et de température sur de grandes plages allant des températures cryogéniques jusque environ 400°C. Dans ce second cas, il est nécessaire de transformer la rotation de l'objet en un déplacement linéaire par l'intermédiaire d'une transmission mécanique adaptée comme une bielle sans jeu. Selon le dimensionnement de cette transmission, la gamme de mesure s'étalera sur quelques millimètres ou quelques centimètres et plus.

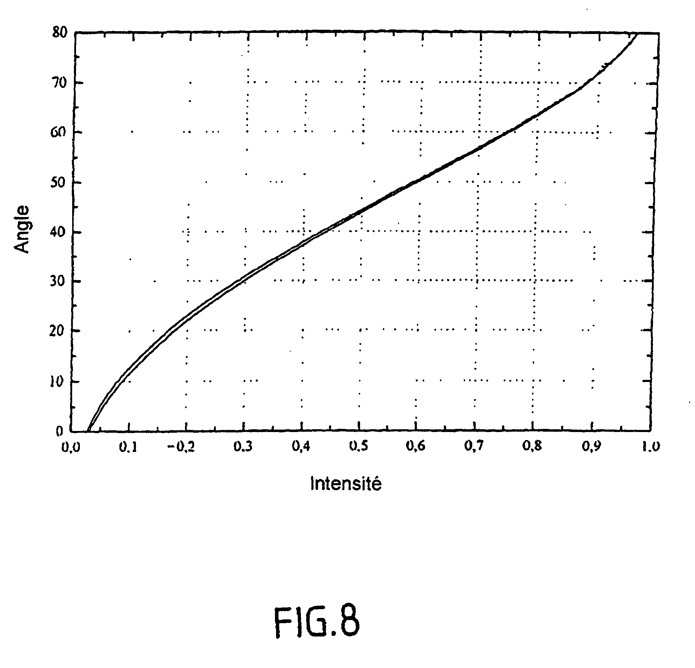

La figure 8 montre deux courbes expérimentales du signal de mesure relevé à la sortie d'un capteur selon l'invention. L'une 70 est enregistrée à température ambiante, T = 20°C et l'autre 72 à la température de l'azote liquide T = -200°C.

Notamment, le capteur selon l'invention est spécialement adapté pour la mesure de la rotation d'une vanne à fluide cryogénique soumise à des pressions élevées et des perturbations de toutes sortes comme les vibrations intenses, champs magnétiques etc. De même, il peut être mis en oeuvre pour la mesure du déplacement d'un aiguillage de voie ferroviaire soumis à de fortes vibrations, des perturbations électromagnétiques et des fluctuations thermiques pouvant aller jusqu'à 100°C. Il peut également être mis en oeuvre pour la mesure de la rotation de volets d'avions dans des conditions magnétiques et atmosphériques difficiles ou bien encore pour la mesure de la rotation de panneaux solaires soumis à des fluctuations thermiques atmosphériques. En pratique, le capteur de l'invention est spécialement indiqué dans toutes les applications où les perturbations étrangères à la rotation de l'objet sont fortes et nombreuses : citons pour exemple la température, les vibrations et la pression.

## Revendications

**1.** Capteur polarimétrique à fibre optique pour la mesure d'un déplacement d'un objet (102, 202, 302) en rotation par rapport à un bâti, comportant une fibre optique de mesure (10) solidaire, sur une fraction de sa longueur, à la fois en un point central (O) de l'objet (102, 202, 302) et en des premier et second points fixes (A, B) du bâti (104, 204, 304), des moyens (120;122) disposés à une extrémité de la fibre de mesure pour émettre dans cette fibre de mesure un faisceau lumineux selon une polarisation déterminée, des moyens pour exercer une torsion sur cette fibre de mesure en vue d'en modifier la polarisation, des moyens (130, 140 ; 50-58) disposés à une autre extrémité de la fibre de mesure pour d'une part détecter le faisceau lumineux résultant et d'autre part déterminer le déplacement de l'objet par analyse de la polarisation ainsi modifiée, **caractérisé en ce que** ladite fibre de mesure (10) qui est dépourvue, sur ladite fraction de sa longueur, du revêtement assurant sa tenue mécanique, est glissée dans une gaine de guidage (22) déformable fixée d'une part à l'objet en rotation et d'autre part au bâti.

**2.** Capteur polarimétrique selon la revendication 1, **caractérisé en ce que** ladite gaine de guidage (22) déformable est réalisée en acier fin.

**3.** Capteur polarimétrique selon la revendication 2, **caractérisé en ce que** ladite gaine de guidage (22) déformable est doublée à l'intérieur par une gaine souple de protection.

**4.** Capteur polarimétrique selon la revendication 1 dans lequel les moyens d'émission (120) émettent un faisceau lumineux de polarisation linéaire, **caractérisé en ce qu'**il comporte en outre des moyens de pression (40) placés en sortie de ces moyens d'émission (120) et destinés à provoquer une rotation sélective de la polarisation.

**5.** Capteur polarimétrique selon la revendication 4, **caractérisé en** lesdits moyens de pression (40) comportent un élément piézoélectrique plan (42) commandé à partir d'une tension (44) et destiné à appliquer sélectivement une force radiale sur la fibre de mesure (10), afin d'obtenir en sortie de ces moyens de pression une polarisation linéaire de direction 45°, la polarisation en entrée de ces moyens de pression (40) étant supposée linéaire de direction 0°.

**6.** Capteur polarimétrique selon la revendication 1 ou la revendication 4, **caractérisé en ce que** lesdits moyens d'émission (120) et de détection du faisceau lumineux de mesure et lesdits moyens (130) de détermination du déplacement de l'objet sont montés dans un boîtier (12) rempli d'une atmosphère sèche et communiquant directement avec un volume intérieur de ladite gaine de guidage (22) déformable.

7. Capteur polarimétrique selon la revendication 6, **caractérisé en ce que** ledit boîtier (12) est maintenu à pression constante par un système de compensation de pression à piston ou membrane (124).

8. Capteur polarimétrique selon la revendication 1, **caractérisé en ce que**, lesdits moyens d'émission (120) et de détection (130) du faisceau lumineux de mesure et lesdits moyens (140) de détermination du déplacement de l'objet étant éloignés de ladite fibre de mesure (10), une des deux extrémités de ladite fibre de mesure est reliée auxdits moyens d'émission (120) au travers d'une fibre « d'émission » (16) et l'autre de ses deux extrémités est reliée auxdits moyens de détection (130) au travers d'une fibre de détection (18), et le volume intérieur de ladite gaine de guidage (22) déformable communique directement avec le volume intérieur d'un boîtier (20) rempli d'une atmosphère sèche et maintenu à pression constante par un système de compensation de pression à piston ou membrane (24).

9. Capteur polarimétrique selon la revendication 6 ou la revendication 8, **caractérisé en ce que** ledit boîtier (12, 20) est fixé au bâti (14) par des moyens de fixation ponctuels (32, 34) faiblement conducteur de la chaleur.

10. Capteur polarimétrique selon la revendication 6 ou la revendication 8, **caractérisé en ce que** ledit boîtier (12, 20) comporte des parois formés en un matériau thermiquement isolant.

11. Capteur polarimétrique selon la revendication 8, **caractérisé en ce que** ledit boîtier (20) comporte en outre un support isostatique (30), avantageusement en matériau céramique, percé de deux trous pour recevoir lesdites fibres d'émission et de détection (16, 18) et pour les maintenir en contact avec lesdites deux extrémités de la fibre de mesure (10).

12. Capteur polarimétrique selon la revendication 11, **caractérisé en ce que** le maintien desdites extrémités de la fibre de mesure (10) dans ledit support (30) est effectué par apport d'un ciment céramique dans lesdits trous.

13. Capteur polarimétrique selon la revendication 11, **caractérisé en ce que** le maintien desdites extrémités de la fibre de mesure (10) dans ledit support (30) est effectué par projection plasma d'un dépôt métallique dans lesdits trous.

**Patentansprüche**

1. Polarimetrischer Lichtleitersensor für die Messung einer Bewegung eines sich gegenüber einem Gestell drehenden Gegenstandes (102, 202, 302), mit einer Messlichtleitfaser (10), die über einen Teil ihrer Länge sowohl in einem Mittelpunkt (O) des Gegenstandes (102, 202, 302) als auch in einem ersten und einem zweiten festen Punkt (A, B) des Gestells (104, 204, 304) fest verbunden ist, mit Mitteln (120; 122), die an einem Ende der Messfaser angeordnet sind, um in diese Messfaser einen Lichtstrahl nach einer bestimmten Polarisation auszusenden, mit Mitteln zum Ausüben einer Torsion auf diese Messfaser, um die Polarisation zu ändern, mit Mitteln (130, 140; 50-58), die an einem anderen Ende der Messfaser angeordnet sind, um einerseits den resultierenden Lichtstrahl zu erfassen und um andererseits die Bewegung des Gegenstandes durch Analyse der so veränderten Polarisation zu bestimmen,
**dadurch gekennzeichnet,**
**dass** die Messfaser (10), die über den genannten Teil ihrer Länge nicht mit der ihre mechanische Festigkeit sicherstellenden Umhüllung versehen ist, in einen verformbaren Führungsmantel (22) geschoben wird, der einerseits an dem sich drehenden Gegenstand und andererseits an dem Gestell befestigt ist.

2. Polarimetrischer Sensor nach Anspruch 1, **dadurch gekennzeichnet, dass** der verformbare Führungsmantel (22) aus Qualitätsstahl besteht.

3. Polarimetrischer Sensor nach Anspruch 2, **dadurch gekennzeichnet, dass** der verformbare Führungsmantel (22) innen mit einer flexiblen Schutzhülle unterlegt ist.

4. Polarimetrischer Sensor nach Anspruch 1, bei dem die Sendemittel (120) einen Lichtstrahl linearer Polarisation aussenden, **dadurch gekennzeichnet, dass** er außerdem Druckmittel (40) enthält, die am Ausgang dieser Sendemittel (120) angeordnet sind und eine selektive Drehung der Polarisation bewirken sollen.

5. Polarimetrischer Sensor nach Anspruch 4, **dadurch gekennzeichnet, dass** die Druckmittel (40) ein flaches piezoelektrisches Element (42) enthalten, das mittels einer Spannung (44) gesteuert wird und an der Messfaser (10) selektiv eine Radialkraft anlegen soll, um am Ausgang dieser Druckmittel eine lineare Polarisation mit einer 45°-Richtung zu erhalten, wobei angenommen wird, dass die Polarisation am Eingang dieser Druckmittel (40) linear ist mit einer 0°-Richtung.

**6.** Polarimetrischer Sensor nach Anspruch 1 oder Anspruch 4, **dadurch gekennzeichnet, dass** die Mittel zum Aussenden (120) und zum Erfassen des Messlichtstrahls sowie die Mittel (130) zum Bestimmen der Bewegung des Gegenstandes in einem Gehäuse (12) angeordnet sind, das mit einer trockenen Atmosphäre gefüllt ist und direkt mit einem Innenraum des verformbaren Führungsmantels (22) verbunden ist.

**7.** Polarimetrischer Sensor nach Anspruch 6, **dadurch gekennzeichnet, dass** das Gehäuse (12) durch ein Kolben- oder Membran-Druckausgleichsystem (124) auf konstantem Druck gehalten wird.

**8.** Polarimetrischer Sensor nach Anspruch 1, **dadurch gekennzeichnet, dass** - da die Mittel zum Aussenden (120) und zum Erfassen (130) des Messlichtstrahls sowie die Mittel (140) zum Bestimmen der Bewegung des Gegenstandes von der Messfaser (10) entfernt sind - eines der beiden Enden der Messfaser über eine "Sende"-Faser (16) mit den Sendemitteln (120) und das andere ihrer beiden Enden über eine Erfassungsfaser (18) mit den Erfassungsmitteln (130) verbunden ist, und der Innenraum des verformbaren Führungsmantels (22) direkt mit dem Innenraum eines Gehäuses (20) verbunden ist, welches mit einer trockenen Atmosphäre gefüllt ist und durch ein Kolben- oder Membran-Druckausgleichsystem (24) auf konstantem Druck gehalten wird.

**9.** Polarimetrischer Sensor nach Anspruch 6 oder Anspruch 8, **dadurch gekennzeichnet, dass** das Gehäuse (12, 20) über gering wärmeleitende Punktbefestigungsmittel (32, 34) an dem Gestell (14) befestigt ist.

**10.** Polarimetrischer Sensor nach Anspruch 6 oder Anspruch 8, **dadurch gekennzeichnet, dass** das Gehäuse (12, 20) Wände aufweist, die aus einem wärmeisolierenden Material gebildet sind.

**11.** Polarimetrischer Sensor nach Anspruch 8, **dadurch gekennzeichnet, dass** das Gehäuse (20) außerdem einen isostatischen Träger (30), vorteilhafterweise aus keramischem Material, aufweist, der von zwei Löchern durchbohrt ist, um die Sende- und Erfassungsfasern (16, 18) aufzunehmen und um sie mit den beiden Enden der Messfaser (10) in Kontakt zu halten.

**12.** Polarimetrischer Sensor nach Anspruch 11, **dadurch gekennzeichnet, dass** die Enden der Messfaser (10) durch Zugabe eines keramischen Zements in die Löcher in dem Träger (30) gehalten werden.

**13.** Polarimetrischer Sensor nach Anspruch 11, **dadurch gekennzeichnet, dass** das Halten der Enden der Messfaser (10) in dem Träger (30) durch Plasmaspritzen eines Metallüberzugs in die Löcher erfolgt.

**Claims**

**1.** An optical-fibre polarimetric sensor for measuring the displacement of a rotary object (102, 202, 302) relative to a frame, the sensor comprising a measurement optical fibre (10) secured, over a fraction of its length, both to a central point (O) of the object (102, 202, 302) and to first and second fixed points (A, B) of the frame (104, 204, 304), means (120; 122) disposed at one end of the measurement fibre and serving to emit a light beam of determined polarization into said measurement fibre, means for exerting twist on the measurement fibre so as to modify the polarization thereof, and means (130, 140; 50-58) disposed at another end of the measurement fibre and serving firstly to detect the resulting light beam and secondly to determine the displacement of the object by analysing the polarization modified in this way, **characterised in that** said measurement fibre (10) is stripped, over said fraction of its length, of the covering that imparts mechanical strength thereto, and it is slid into a deformable guide sheath (22) fixed both to the rotary object and also to the frame.

**2.** A polarimetric sensor according to claim 1, **characterised in that** said deformable guide sheath (22) is made of fine steel.

**3.** A polarimetric sensor according to claim 2, **characterised in that** said deformable guide sheath (22) is lined with a flexible protective sheath.

**4.** A polarimetric sensor according to claim 1, in which the emission means (120) emit a linearly-polarized light beam, said polarimetric sensor being **characterised in that** it further comprises pressure means (40) placed at the outlet of said emission means (120) and serving to cause the polarization to be rotated selectively.

**5.** A polarimetric sensor according to claim 4, **characterised in that** said pressure means (40) include a plane piezoelectric element (42) controlled on the basis of a voltage (44), and serving to apply a radial force selectively to the measurement fibre (10), so as to obtain, at the outlet of the pressure means, a linear polarization in the 45° direction, the polarization at the inlet of the pressure means (40) being assumed to be linear and in the 0° direction.

**6.** A polarimetric sensor according to claim 1 or claim 4, **characterised in that** said light beam emission means (120) and detection means, and said means (130) for determining the displacement of the object are mounted in a box (12) filled with a dry atmosphere and communicating directly with an inside volume of said deformable guide sheath (22).

**7.** A polarimetric sensor according to claim 6, **characterised in that** said box (12) is maintained at constant pressure by a pressure compensation system having a piston or a diaphragm (124).

**8.** A polarimetric sensor according to claim 1, **characterised in that**, with said light beam emission means (120) and said light beam detection means (130), and said means (140) for determining the displacement of the object being distant from said measurement fibre (10), one of the two ends of said measurement fibre is connected to said transmit means (120) via an "emission" fibre (16), and the other of its two ends is connected to said detection means (130) via a detection fibre (18), and the inside volume of said deformable guide sheath (22) communicates directly with the inside volume of a box (20) filled with a dry atmosphere and maintained at constant pressure by a pressure compensation system having a piston or a diaphragm (24).

**9.** A polarimetric sensor according to claim 6 or claim 8, **characterised in that** said box (12, 20) is fixed to the frame (14) by point fixing means (32, 34) that are poor conductors of heat. ,

**10.** A polarimetric sensor according to claim 6 or claim 8, **characterised in that** said box (12, 20) includes walls formed of a thermally-insulating material.

**11.** A polarimetric sensor according to claim 8, **characterised in that** said box (20) further includes an isostatic support (30) advantageously made of a ceramic material and provided with two holes for receiving said emission and detection fibres (16, 18) and for maintaining them in contact with said two ends of the measurement fibre (10).

**12.** A polarimetric sensor according to claim 11, **characterised in that** said ends of the measurement fibre (10) are held in said support (30) by filling said holes with ceramic cement.

**13.** A polarimetric sensor according to claim 11, **characterised in that** said ends of the measurement fibre (10) are held in said support (30) by depositing metal in said holes by plasma spraying.

FIG.1

FIG.2A

FIG.2B

FIG.2C

FIG.3

122

30

10

160

20

# FIG.4A

122

30

10

162

164

20

# FIG.4B

122

168

30

10

170

172

174

166

20

# FIG.4C

FIG.5

FIG.5A

intensité

fenêtre
d'utilisation
sans
commutation
de la
polarisation
d'entrée

fenêtre
d'utilisation
avec
commutation
de la
polarisation
d'entrée

angles

étalonnage
n°1

étalonnage
n°2

étalonnage
n°3

FIG.6

FIG.7

FIG.8